(19) Europäisches Patentamt / European Patent Office / Office européen des brevets

(11) **EP 4 270 278 A1**

(12) **EUROPEAN PATENT APPLICATION**

(43) Date of publication:
**01.11.2023 Bulletin 2023/44**

(21) Application number: **22169667.7**

(22) Date of filing: **25.04.2022**

(51) International Patent Classification (IPC):
**G06Q 10/06** (2023.01)        **G06F 16/22** (2019.01)

(52) Cooperative Patent Classification (CPC):
**G06Q 10/063; G06Q 10/0631; G06Q 10/06311;
G06Q 10/063118; G06Q 10/06313**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MRothe Holding GmbH
01069 Dresden (DE)**

(72) Inventors:
• **GRAUPNER, Michél
01069 Dresden (DE)**
• **THOMÄ, Andreas
01069 Dresden (DE)**

(74) Representative: **Goebel, Sebastian
Bösherz Goebel Patentanwälte
Rheinberger Weg 6
40670 Meerbusch (DE)**

(54) **RESOURCE ALLOCATION IN COMPLEX ENVIRONMENTS**

(57)    Embodiments of the invention provide techniques for storing, processing and retrieving electronic data using data structures for efficient management of data. A method for efficient resource allocation provides electronic data which represents a plurality of slots (106) onto which resources (108) can be allocated. Each slot (106) is a member of a slot group (104). There are multiple slot groups (104) and each slot group (104) is a member of a higher-level slot group (102), thereby arranging the slots (106) in a hierarchy (100) with at least two hierarchical levels of slot groups (102, 104). The method includes storing the electronic data in a non-hierarchical data structure (200), wherein the non-hierarchical data structure (200) comprises one data entry (202) for each slot (106), wherein each data entry (202) stores information to indicate the position of the corresponding slot (106) in the hierarchy (100). The method further includes receiving a request to allocate resources (108) to the slots (106) such that every slot (106) is occupied, and allocating at least part of the resources (108) to the slots (106) using the non-hierarchical data structure (200).

FIG. 1

EP 4 270 278 A1

## Description

### TECHNICAL FIELD

The present invention generally concerns the field of data processing systems, and in particular techniques for storing, processing and retrieving electronic data using data structures for efficient management of data.

### BACKGROUND

Resource allocation is a difficult task in modern data processing systems. In the context of the present disclosure, resource allocation may generally refer to the process of storing electronic data in a data structure by assigning data items to portions of the data structure. Depending on the type of data to be processed, its semantics and the intended use of the data, the data structure serving as a storage container for the data may be of a complex structure and may impose complex requirements on the manner the data is stored therein. In other words, individual data items must be assigned, i.e., allocated, to the correct portions of the container data structure in the face of complex constraints associated with the container data structure, the individual data items, and possibly also complex dependencies between the data items.

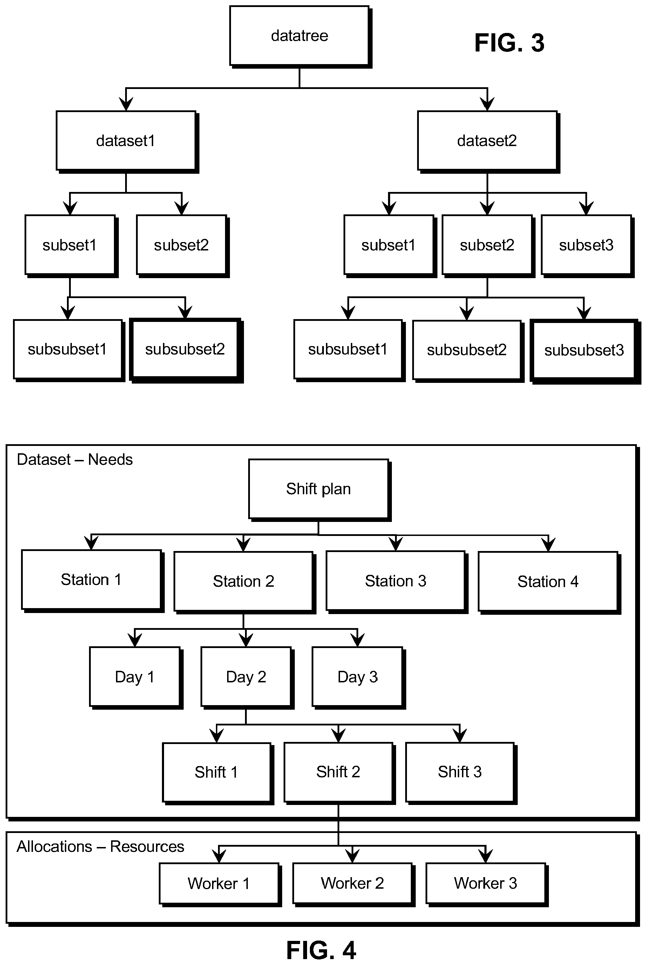

As an illustrative example, Fig. 3 shows a data tree with hierarchically nested datasets. As can be seen, the tree comprises datasets which in turn comprise subsets which in turn comprise sub-subsets. In computer science, a tree may refer to a data type that simulates a hierarchical tree structure, with a root value and subtrees of children with a parent node, represented as a set of linked nodes. A tree data structure may be defined recursively as a collection of nodes, where each node is a data structure comprising a value and a list of references to nodes. The start of the tree is typically referred to as the "root node" and the reference nodes are the "children". A node that does not have children is typically called a "leaf node". Note that Fig. 3 shows only three nested levels of datasets for simplicity, but there can be an arbitrary number n of nested levels of the tree. Resources are to be allocated to the leaves of the tree data structure, i.e., in the example of Fig. 3, to the sub-subsets which serve as "slots" for the resources, wherein the higher-level subsets and datasets serve for organizing the overall storage container data structure.

An additional layer of complexity is introduced if there are dependencies between datasets of the data structure. For example, when a resource is assigned to a certain slot, say dataset2.subset2.subsubset3 (highlighted in bold in Fig. 3), the constraint may be that the same resource must not be assigned to dataset1.subset1.subsubset2 (also highlighted in bold in Fig. 3) at the same time.

A programmatically simple solution for allocating the resources in such a scenario, which is used frequently by software engineers, is to write software which, for a given set of resources to be allocated, calculates all possible candidate allocations and ranks them according to certain benchmarks to select the most suitable allocation. This approach may be suitable for simple scenarios. However, because of the limitations of contemporary computer hardware resources, in particular CPU, main memory and hard disk, it is not feasible, or may even be impossible, for applications with higher complexity. In the example of Fig. 3, the complexity to solve the resource allocation problem is:

$$(\text{count(datasets)} \cdot \text{count(subsets)} \cdot \text{count(subsubsets)})^2$$

The problem may become even more severe when the dependencies are more complex. For example, the resource allocation may need to meet some or all of the following constraints:

- The entities of a resource can equally be assigned to the slots

- There is a known number of constraints for the resources to be assigned to the slots

- Every time an entity of a resource is assigned to a slot, this may have an impact on other entities being assigned to the same or other slots

- Resources are not changing within the allocation process

- Over iterations there are new allocations of resources to slots where the past allocation may impact future allocations

It is therefore a problem underlying the invention to provide techniques for efficient resource allocation which overcome the above-mentioned disadvantages of the prior art at least in part.

## SUMMARY

One embodiment of the invention provides a computer-implemented method for efficient resource allocation. The method may comprise the step of providing electronic data which represents a plurality of slots onto which resources can be allocated. Each slot may be a member of exactly one slot group, and there may be multiple slot groups. Each slot group may be a member of exactly one higher-level slot group. Thereby, the slots may be arranged in a hierarchy with at least two hierarchical levels of slot groups.

The method may further comprise the step of storing the electronic data in a non-hierarchical data structure. The non-hierarchical data structure may comprise one data entry for each slot. Each data entry may store information to indicate the position of the corresponding slot in the hierarchy. The method may further comprise the step of receiving a request to allocate resources to the slots. The request may indicate that every slot is to be occupied or that a predefined number, or ratio, of slots is to be occupied. The method may further comprise the step of allocating at least part of the resources to the slots using the non-hierarchical data structure.

Accordingly, this aspect of the invention provides a method implemented on a computer to perform the technical tasks of storing and retrieving data using data structures specifically adapted for efficient management of data. One principle realized in the above aspect is to de-combine the (arbitrarily complex) hierarchical tree structure represented in the electronic data. By storing the electronic data in a non-hierarchical data structure, the data entries of which store information to indicate the position of the corresponding slot in the hierarchy, it is possible to "flatten out" the tree, thereby removing its exponential complexity. This way, the execution of the allocation process is optimized with respect to the computer resources needed (in particular CPU, main memory and/or hard disk), thereby efficiently exploiting the computer system.

By way of analogy, in the field of database management systems, the concept of a query tree may be used, which is an internal representation of an SQL statement where the single parts that built it are stored separately. In other words, in the SQL context, arbitrarily complex hierarchical queries are applied to storage data structures (i.e., the tables of the database management systems). By comparison, in aspects of the invention, it is the storage data structure that can be of arbitrarily complex structure, and the invention aims at improving system throughput and response times when processing allocation requests by way of the disclosed hardware-efficient resource allocation techniques.

In one aspect of the invention, the allocating step may comprise, before allocating a resource to a slot, validating a set of statistics, and allocating the resource to the slot only if the set of statistics can be validated. The method may further comprise, upon allocation of the resource to the slot, updating the set of statistics. This way, the resource allocation can be controlled efficiently by way of validating pre-defined statistics or attributes which may be selected according to the given circumstances.

The set of statistics may comprise at least one resource-specific statistic associated with a resource, at least one global statistic and/or at least one slot-specific statistic associated with a slot. Accordingly, various types of statistics may be defined which apply to slots, to resources, or globally to the allocation as a whole.

In another aspect, the step of validating the set of statistics may comprise checking a set of predefined constraints. The constraints may be simple or arbitrarily complex rules, depending on the given circumstances.

In another aspect, the allocating step may comprise, for each data entry of the non-hierarchical data structure, iterating through the resources to determine an allocation of the resources to the slots. The iterative manner of the resource allocation in combination with the flattened data structure results in a particularly efficient and resource-saving determination of the resource allocation. The set of statistics may be updated in each iteration.

In a practical implementation, the non-hierarchical data structure may be a one-dimensional data structure, in particular a list structure.

In another aspect, the method may comprise the further step of generating instructions for displaying or printing a graphical representation of a result of the allocation of resources to slots. Accordingly, the method provides in this aspect a physical output which is usable by the intended end user.

In one example, the hierarchy represents a shift plan, the slots represent workers required in a shift at a station, and the resources represent available workers.

The present invention also provides a data processing apparatus or system comprising means for carrying out any of the disclosed methods. Also, a computer program or a computer-readable medium having stored thereon the computer program is provided, the computer program comprising instructions which, when executed by a computer, cause the computer to carry out any of the disclosed methods. Lastly, also a non-hierarchical data structure for use in any of the disclosed methods is provided.

## BRIEF DESCRIPTION OF THE DRAWINGS

The disclosure may be better understood by reference to the following drawings:

Fig. 1: An example of electronic data that represents a hierarchically organized set of slots for the allocation of resources in accordance with embodiments of the invention.

Fig. 2: A non-hierarchical data structure for storing data entries that represent the slots of the hierarchical structure of Fig. 1 in accordance with embodiments of the invention.

Fig. 3: An exemplary data tree with datasets nested in three levels.

Fig. 4: A portion of a shift plan as an example of the hierarchy of Fig. 1 relating to a non-limiting use case of shift planning in accordance with embodiments of the invention.

Fig. 5: Two exemplary iterations of an allocation algorithm in accordance with embodiments of the invention.

Fig. 6: An example evaluation of complex scores in accordance with embodiments of the invention.

Fig. 7: A flowchart illustrating a pre-calibration process as part of the nested scoring in accordance with embodiments of the invention.

Fig. 8: A flowchart illustrating an iterative nested scoring algorithm in accordance with embodiments of the invention.

## DESCRIPTION OF PREFERRED EMBODIMENTS

Embodiments of the invention provide an innovative way to solve the resource allocation problem with lower hardware requirements.

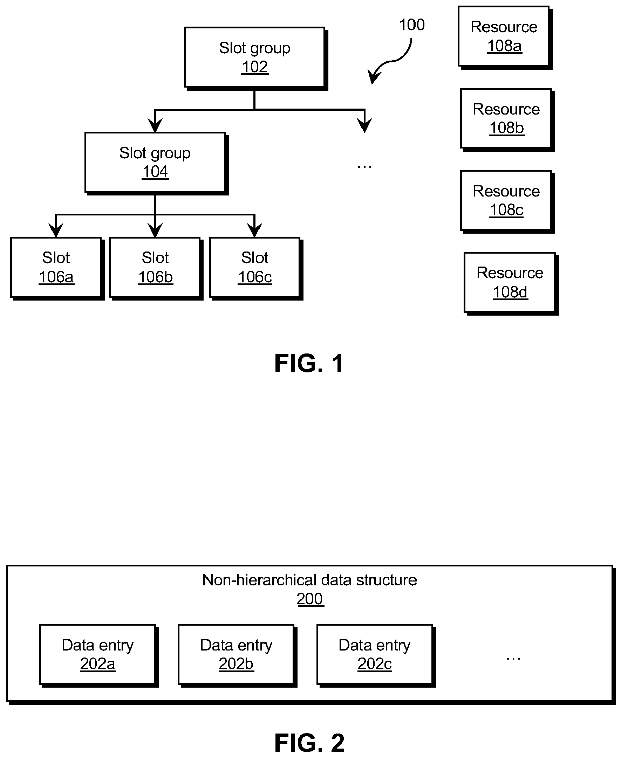

Fig. 1 shows an example of electronic data that represents a hierarchically organized set of slots for the allocation of resources in accordance with embodiments of the invention. As can be seen, there are three slots 106a, 106b, 106c organized in a slot group 104. Slot group 104 is in turn organized in a higher-level slot group 102, thereby forming a multi-level hierarchy 100. It will be understood that Fig. 1 shows only a portion of the resulting tree data structure because, as indicated in the figure, slot group 104 may have any number of sibling slot groups. Furthermore, the example in Fig. 1 is a simple one for the sake of explanation. Apparently, the number of slots in a slot group is not limited, and there may be more levels of nested slot groups than shown in the example in Fig. 1. Fig. 1 also shows four exemplary resources 108a-d which are about to be allocated to the slots of the hierarchy 100. Also here, it is clear that the number of resources may vary.

While the concepts and principles of embodiments of the invention are largely applicable to any type of resource, they will now be described with reference to Fig. 4 in a non-limiting exemplary use case in the field of shift planning. Fig. 4 shows a portion of a shift plan as an embodiment of the hierarchy 100 of Fig. 1. The shift plan serves to organize the workload across four stations, wherein each station represents a first-level slot group 102. Every station has three shifts (e.g., morning, day, night), wherein each shift represents a second-level slot group 104. The company, which may in this use case be a hospital, nursing home or the like, needs to allocate three workers to every shift in every station for every day. Accordingly, every shift has three slots 106 onto which a worker can be allocated. The workers represent the resources 108 to be allocated in this example.

In the example, a worker cannot work on two different stations at the same time. Validating this constraint in the shift plan in the form of the hierarchical data structure shown in Fig. 4 would result in calculating, for every day:

$$4 \text{ stations} \cdot 3 \text{ shifts} \cdot 3 \text{ workers} = 36 \text{ checks.}$$

For every check, the algorithm would have to follow every node in the tree to determine if the worker has already been booked to a competing slot. This equals an exponent of 2, so that $36^2 = 1.296$ operations are needed for each day. It goes without saying that the complexity in a more complex tree (e.g., with ten workers) would quickly explode, making the above-described computer implementation unpracticable, or even impossible, on contemporary hardware resources.

DE-COMBINING TREES

To reduce this complexity, the tree is de-combined in certain embodiments of the invention. The tree structure is being brought from n levels of organization to only one level of organization, i.e., a non-hierarchical data structure is generated. Fig. 2 shows a schematic view of a non-hierarchical data structure 200. The data structure 200 comprises data entries 202a, 202b, 202c representing the slots of the hierarchical tree. The number of data entries is not limited. It is important to observe that the data structure 200 has only a single level, i.e., it can be conceptualized as a list.

To preserve the information about the hierarchical organization of the structure, the non-hierarchical data structure 200 may store information to indicate the position of the corresponding slot (106) in the hierarchy, e.g., in the form of metadata. In the shift planning example, a first entry 202a of the data structure 200 may indicate that the corresponding slot belongs to shift 1, station 1, day 1 and a second entry 202b may indicate that the corresponding slot belongs to shift 2, station 1, day 1 and so on, for example.

Staying in the shift planning example, the non-hierarchical data structure needs only 108 slots (= 4 stations · 3 days · 3 shifts · 3 workers). Note that in this example the shift plan is drawn up for three consecutive days but could alternatively be generated for another number of days, such as a week plan or a month plan, depending on the circumstances. The algorithm needs to evaluate only 324 operations (= 108 slots . 3 workers) instead of 1.296.

ONGOING STRUCTURAL VALIDATION INSTEAD OF END-VALIDATION

Typically, not only a single constraint has to be fulfilled to build a valid disposition plan (allocation), but in reality there can be an arbitrarily complex set of constraints. In the shift planning example, exemplary constraints may include:

- A worker cannot work two shifts a day

- Some workers can work on different stations, some cannot

- Workers can only work 40 hours a week

- Some workers can only work morning shifts

Processing such a variety of constraints would again introduce exponential complexity. Therefore, certain embodiments of the invention check validations in the process of generating the allocation (i.e., during "writing the plan") instead of creating all possible candidate allocations and evaluating them afterwards.

To this end, certain embodiments of the invention may generate calculated values, so called statistics or "stats" and may keep them updated to build a plan that matches all constraints because its parts meet the constraints.

After the de-combination described already further above, the algorithm only needs to iterate over one single list of slots. The stats for every item of the resource (e.g., worker) can be updated on every iteration. There may also be global stats.

ALLOCATION ALGORITHM

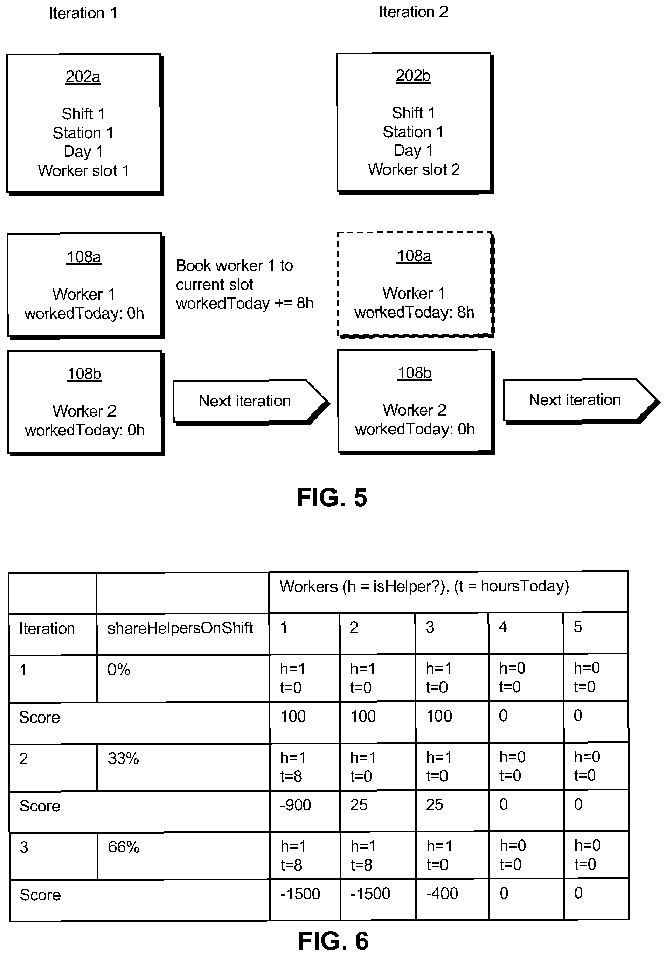

Fig. 5 shows two exemplary iterations of the allocation algorithm in accordance with an embodiment of the invention. In the first iteration, data entry 202a, which represents the first worker slot in shift 1 on day 1 on station 1, is to be filled. There are two exemplary workers 108a and 108b available. The data structures representing the workers store supplementary data to record the time the corresponding worker has worked already, which is an example of the above-mentioned stats. Initially, the time "workedToday" is 0 hours in the example in iteration 1.

In the example, the constraint is that a given worker cannot work more than 10 hours on a given day, and thus, both workers are candidates for filling the slot. In the example, worker 108a is selected. In case multiple workers meet the allocation constraints, the algorithm may select the worker according to a predefined order or randomly. Fig. 5 also shows that the stat "workedToday" is increased by 8 hours for worker 108a after said worker has been selected to fill the slot represented by data entry 202a.

The algorithm then goes on to the next data entry 202b, which represents the second worker slot in shift 1 on day 1 on station 1, and searches for candidate workers. As can be seen, at this time, the stat "workedToday" of worker 108a is already at 8h and thus selecting worker 108a would violate the constraint that a given worker cannot work more than 10 hours on a given day. Accordingly, the algorithm selects worker 108b to be assigned to data entry 202b Note that the stat "workedToday" and the corresponding constraint is just one example and that the set of statistics and set of constraints can be arbitrarily complex.

In a given iteration, the algorithm may evaluate all constraints defined for the resource and/or the slot to be allocated. In the above example, the algorithm may be programmed to reset the stat "workedToday" to 0 whenever the day changes.

HARD AND SOFT CONSTRAINTS

Not every constraint makes it impossible to assign a resource to a slot, but sometimes constraints may only make it more or less profitable to assign a resource to a slot. Moreover, there may be constraints within the structure of the plan itself, making it more or less profitable to book a special resource to a slot in the next iteration.

For example, there may be multiple types of resources to be assigned to the slots. In the shift planning example, a worker may be either a helper or a professional. Helpers are less expensive. A professional is needed in every shift to guide the helpers. The targeted share of both types of workers may be 50/50, but if necessary it could also be 75% helpers and 25% professionals. 100% professionals are not profitable but still allowed. To have only helpers on a station is not allowed in the example (hard constraint).

In such a scenario, within a shift, the slots already booked have an impact on the allocation of the other slots. The probability to book a helper to a slot decreases with every helper already booked to the same shift.

In certain embodiments, the algorithm builds a score value for every resource item in every iteration. The resource item with the highest score is then applied to the slot.

An example will now be described with reference to Fig. 6. The exemplary constraint rules in this example are:

- The objective is to book helpers whenever possible, so the algorithm scores +100 if someone is a helper.

- If the share of helpers on a given shift would go over 50%, the score is decreased by 75.

- If the share of helpers on a given shift would go over 75%, the score is decreased by 500.

- Over hours shall be avoided at any cost, so if the "hoursToday" stat is more than 8 the score is decreased by 1000.

- There are three slots to be filled in every shift.

With reference now to Fig. 5, the algorithm iterates through the data entries 202 in the flattened data structure 200. In each iteration, the statistics will be evaluated to update the respective scores, and the worker 108 with the highest score will be selected for the current slot. When the algorithm iterates to the next data entry, the newly calculated scores will apply in this new iteration. At the end, in the example the algorithm will pick two helpers and one professional, i.e. in the exemplary table in Fig. 6 the workers 1, 2 and 4.

It will be appreciated that this is a simple example. In the real world, there may be vast amounts of constraints (e.g., weekly workload, preferred shifts, ...), which leads to a complex scoring.

In a preferred embodiment, the scoring itself will always stay in the iterations, and therefore will have linear complexity instead of exponential complexity, as in the prior art solution. This way, thanks to the invention, a conventional contemporary computer can calculate very complex scores efficiently.

In a practical algorithm configuration, a resource will not even be considered when a hard constraint fails. In summary, in one embodiment of the invention, the scoring comprises the following steps:

1. Check for hard constraints. Remove every resource item from the scope for this slot which conflicts in at least one hard constraint.

2. Calculate the score values for every soft constraint (positive or negative) for every possible resource for this slot.

3. Order the resources by their scores. Take the resource with the highest score.

4. If two items reach the same score, choose an item randomly.

PRACTICAL IMPLEMENTATION

In the following, a practical implementation of the principles disclosed in relation with embodiments of the invention will now be described. The described process comprises the phases "Demand calculation", "Preparing the empty shiftplan" and "Nested score workers to shift":

1. Demand calculation

In the example, the goal is to calculate the daily working time demand for every station, both for the whole month and daily.

Statistics in this example:

- Occupation per station type and patient

- Staff allocation key per patient (day shifts)

- Staff allocation kay (night shift) (1/40)

- Quota prof (50%)

- Factor sick leave (7% default)

- Factor vacation (13% default)

Target calculations:

- Needed staff (prof + helper) early + late

  Needed professional staff (prof + helper) night

- Manhours station (whole day)

Formulas:

- $$StaffStationPerDay = Occupation[P1..5] / StaffAllocationKey[P1...5]$$

- $$NightStaffAllocation = Occupation[SUM] / 40$$

- $$FactorPaidAbsence = 1 - (FactorSickLeave + FactorVacation)$$

- $$FullTimeMonth = (DaysOfMonth / 7) * FullTimeWeeklyHours * FactorPaidAbsence$$

- $$FullTimeDaily = FullTimeMonth / DaysOfMonth$$

- $$ManHoursStationWholeDay = StaffStationPerDay * FullTimeDaily$$

- $$ManHoursStationWholeMonth = ManHoursStationWholeDay * DaysOfMonth$$

2. Preparing the empty shiftplan

An empty initial shiftplan is created. ShiftTemplates may be used to create the "real" Shifts. On doing so use

- The days and time frames for every ShiftTemplate

- The priority of a ShiftTemplate for a special day

- Day staff allocation is equally distributed throughout the day shifts. Prioritisation happens later in the nested score

Statistics:

- Station, Start- and Endtime for every Shift

- Priority of this shift for every weekday

- ManHoursStationWholeDay

3. Nested score workers to shift

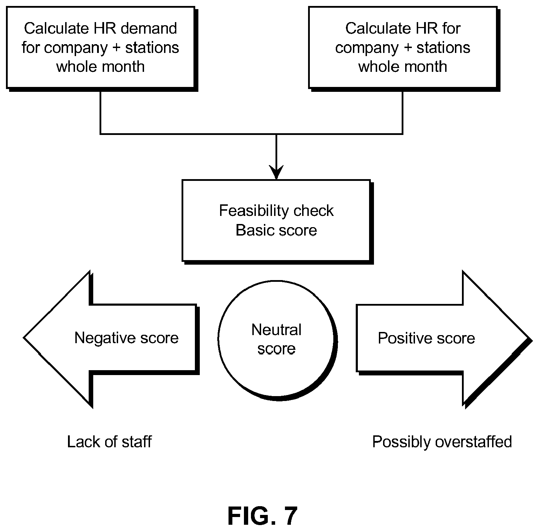

First, a pre-calibration process as illustrated in Fig. 7 is performed. After the pre-calibration, calculation data is provided. In the illustrated example, the data comprises:

| ShiftStats |
| --- |
| id (int)<br>estimatedStaff<br>priority<br>currentStaffMix<br>scoringFactorData |
| currentStaffMix = Profis / Staff |

| CoworkerStats |
| --- |
| id (int)<br>lastShiftEnd<br>shiftsInARow<br>offtimeStatus<br>workloadThisWeek<br>hoursAccount<br>scoringFactorData |
| hoursAccount = monthlyHours - overHoursPreMonth |

| Station Stats |
| --- |
| id (int) dailyManHoursNeeded<br>dailyManHoursBooked<br>hoursAccount<br>caseMix<br>scoringFactorData |
| hoursAccount = monthlyHours - overHoursPreMonth |

Then, the shift plan is serialized to transform the hierarchical data structure into a flattened data structure, as explained. In the example, this results in a global array of shifts of the following format:

| ShiftStats |
| --- |
| id (int) |

(continued)

| ShiftStats |
| --- |
| Shift shift |
| ShiftStats stats |
| dateTimeFrom |
| dateTimeTo |
| Station station_id |
| Worker[] worker_ids |
| Ordered by dateTimeFrom, Station.id ASC |

Next, the following global arrays are created (in case of a planning start "in month" or a shortage, the stats may be "warmed" with existing data):

| array workers |
| --- |
| id (coworker.id) |
| Coworker coworker |
| CoworkerStats stats |

| array stations |
| --- |
| id (station.id) |
| Station station |
| Station Stats stats |

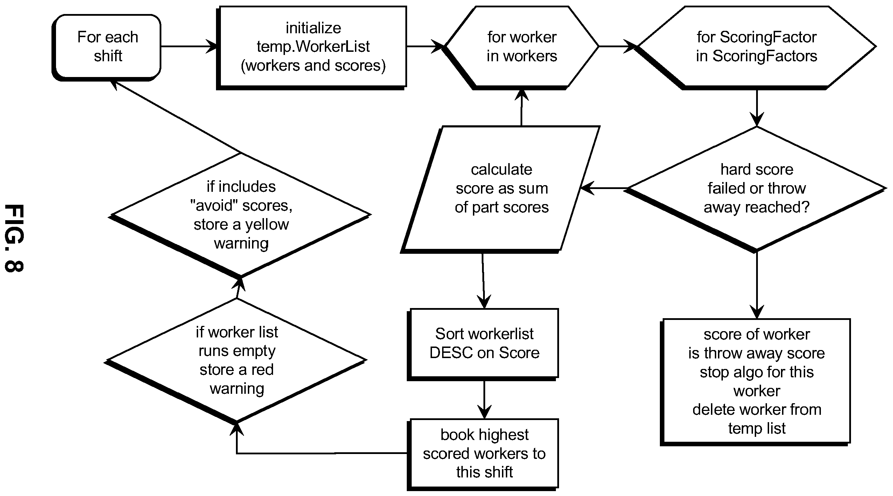

Then, the iterative nested scoring is performed as shown in Fig. 8. In the example, the score factor is defined as:

| ScoreFactor |
| --- |
| id (int) |
| string name |
| string description |
| bool isHardFactor |

| array configuration |
| --- |
| json formula |
| float priority |
| float getScore |

The "throwaway" threshold mentioned in Fig. 8 may be a negative Score that leads to breaking up the algorithm for a worker "obvious not settable for this shift". The "avoid" threshold may be a negative score that evaluates the booking of a worker to a shift as negative.

EXAMPLE APPLICATION: SHIFT PLANNING

This example has already been described above. The resources are workers, the slots are within shifts at a station in a healthcare environment, e.g., a nursery home. The allocation process should answer the question "Which worker should work on which shift?"

EXAMPLE APPLICATION: SICK LEAVE MANAGEMENT

A coworker of a company gets sick suddenly. Someone else has to cover the shift. The allocation process should answer the question "Who should be the one that takes over?"

EXAMPLE APPLICATION: ELECTRONIC CAR LOADING

A company has an amount of 200 electric cars to visit customers. The same company only has 50 loading points to get all cars loaded. In this example, the resources are the electric cars and the slots are the loading points. The allocation process should answer the question "Which car has the priority to get loaded?"

EXAMPLE APPLICATION: LOGISTIC PROCUREMENT

A company has an amount of 200 storage boxes. Some boxes are easy to reach, some take more effort to be reached. The allocation process should answer the question "Which products should be stored in which boxes?"

COMPUTER IMPLEMENTATION

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The computer systems disclosed herein may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA) or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

**Claims**

1. A computer-implemented method for efficient resource allocation with at least the following steps:

   providing electronic data which represents a plurality of slots (106) onto which resources (108) can be allocated, wherein each slot (106) is a member of a, preferably exactly one, slot group (104), wherein there are multiple slot groups (104) and each slot group (104) is a member of a, preferably exactly one, higher-level slot group (102), thereby arranging the slots (106) in a hierarchy (100) with at least two hierarchical levels of slot groups (102, 104);

storing the electronic data in a non-hierarchical data structure (200), wherein the non-hierarchical data structure (200) comprises one data entry (202) for each slot (106), wherein each data entry (202) stores information to indicate the position of the corresponding slot (106) in the hierarchy (100);

receiving a request to allocate resources (108) to the slots (106); and

allocating at least part of the resources (108) to the slots (106) using the non-hierarchical data structure (200).

2. The method of claim 1, wherein the allocating step comprises:

before allocating a resource (108) to a slot (106), validating a set of statistics, and allocating the resource (108) to the slot (106) only if the set of statistics can be validated; and

upon allocation of the resource (108) to the slot (106), updating the set of statistics.

3. The method of claim 2, wherein the set of statistics comprises at least one resource-specific statistic associated with a resource (108).

4. The method of claim 2 or 3, wherein the set of statistics comprises at least one global statistic.

5. The method of any one of claims 2-4, wherein the set of statistics comprises at least one slot-specific statistic associated with a slot (106).

6. The method of any one of the preceding claims 2-5, wherein the step of validating the set of statistics comprises checking a set of predefined constraints.

7. The method of any one of the preceding claims, wherein the allocating step comprises:
for each data entry (202) of the non-hierarchical data structure (200), iterating through the resources (108) to determine an allocation of the resources (108) to the slots (106).

8. The method of claim 2 and 7, wherein the set of statistics is updated in each iteration.

9. The method of any one of the preceding claims, wherein the non-hierarchical data structure is a one-dimensional data structure, in particular a list structure.

10. The method of any one of the preceding claims, comprising the further step of generating instructions for displaying or printing a graphical representation of a result of the allocation of resources (108) to slots (106).

11. The method of any one of the preceding claims, wherein the hierarchy (100) represents a shift plan;

wherein the slots (106) represent workers required in a shift at a station; and

wherein the resources (108) represent available workers.

12. A data processing apparatus or system comprising means for carrying out the method of any one of claims 1-11.

13. A computer program or a computer-readable medium having stored thereon the computer program, the computer program comprising instructions which, when executed by a computer, cause the computer to carry out the method of any one of claims 1-11.

14. A non-hierarchical data structure for use in the method of any one of claims 1-11.

**FIG. 1**

**FIG. 2**

**FIG. 3**

```
                    datatree
             ┌─────────┴──────────┐
         dataset1              dataset2
       ┌────┴────┐        ┌──────┼──────┐
   subset1    subset2   subset1 subset2 subset3
      │                    │      │      │
  ┌───┴───┐            subsubset1 subsubset2 subsubset3
subsubset1 subsubset2
```

```
Dataset – Needs

                    Shift plan
        ┌──────────┬───┴────┬──────────┐
    Station 1  Station 2  Station 3  Station 4
              ┌────┼────┐
           Day 1  Day 2  Day 3
              ┌────┼────┐
          Shift 1 Shift 2 Shift 3

Allocations – Resources
          Worker 1  Worker 2  Worker 3
```

**FIG. 4**

Iteration 1 | Iteration 2

```
┌─────────────────┐              ┌─────────────────┐
│      202a       │              │      202b        │
│                 │              │                  │
│     Shift 1     │              │     Shift 1      │
│    Station 1    │              │    Station 1     │
│      Day 1      │              │      Day 1       │
│  Worker slot 1  │              │  Worker slot 2   │
└─────────────────┘              └─────────────────┘
```

```
┌─────────────────┐   Book worker 1 to    ┌ ─ ─ ─ ─ ─ ─ ─ ─ ┐
│      108a       │   current slot        │      108a        │
│                 │   workedToday += 8h    │                 │
│    Worker 1     │                        │    Worker 1      │
│ workedToday: 0h │                        │ workedToday: 8h  │
└─────────────────┘                        └ ─ ─ ─ ─ ─ ─ ─ ─ ┘
```

```
┌─────────────────┐                       ┌─────────────────┐
│      108b       │   ┌──────────────┐     │      108b        │   ┌──────────────┐
│                 │   │ Next iteration│    │                 │   │ Next iteration│
│    Worker 2     │   └──────────────┘     │    Worker 2      │   └──────────────┘
│ workedToday: 0h │                        │ workedToday: 0h  │
└─────────────────┘                        └─────────────────┘
```

## FIG. 5

|  |  | Workers (h = isHelper?), (t = hoursToday) | | | | |
|---|---|---|---|---|---|---|
| Iteration | shareHelpersOnShift | 1 | 2 | 3 | 4 | 5 |
| 1 | 0% | h=1 t=0 | h=1 t=0 | h=1 t=0 | h=0 t=0 | h=0 t=0 |
| Score |  | 100 | 100 | 100 | 0 | 0 |
| 2 | 33% | h=1 t=8 | h=1 t=0 | h=1 t=0 | h=0 t=0 | h=0 t=0 |
| Score |  | -900 | 25 | 25 | 0 | 0 |
| 3 | 66% | h=1 t=8 | h=1 t=8 | h=1 t=0 | h=0 t=0 | h=0 t=0 |
| Score |  | -1500 | -1500 | -400 | 0 | 0 |

## FIG. 6

Calculate HR demand for company + stations whole month

Calculate HR for company + stations whole month

Feasibility check Basic score

Negative score

Neutral score

Positive score

Lack of staff

Possibly overstaffed

FIG. 7

FIG. 8

Europäisches
Patentamt

European
Patent Office

Office européen
des brevets

# EUROPEAN SEARCH REPORT

Application Number

EP 22 16 9667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SINHA ARNAB ET AL: "Distributed Tree Structure for Composite Physical Objects", PROCEDIA COMPUTER SCIENCE, vol. 32, 1 January 2014 (2014-01-01), pages 587-595, XP055968230, AMSTERDAM, NL ISSN: 1877-0509, DOI: 10.1016/j.procs.2014.05.464 Retrieved from the Internet: URL:http://dx.doi.org/10.1016/j.procs.2014.05.464> * the whole document * | 1-14 | INV. G06Q10/06 G06F16/22 |
| | ----- | | |
| | | | TECHNICAL FIELDS SEARCHED (IPC) |
| | | | G06Q G06F |

The present search report has been drawn up for all claims

| Place of search | Date of completion of the search | Examiner |
|---|---|---|
| Munich | 5 October 2022 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ......................................................................

& : member of the same patent family, corresponding document

EPO FORM 1503 03.82 (P04C01)